# EUROPEAN PATENT SPECIFICATION

(11) **EP 3 327 484 B1**
(45) Date of publication and mention of the grant of the patent: **18.03.2020**
(21) Application number: 16201150.6
(22) Date of filing: 29.11.2016
(51) Int. Cl.: G02B 27/01, G02B 27/00

(54) **REFLECTION PROTECTION FOR A HEAD UP DISPLAY SYSTEM**
REFLEXIONSSCHUTZ FÜR EIN BLICKFELD-ANZEIGESYSTEM
PROTECTION DE RÉFLEXION POUR UN SYSTÈME D'AFFICHAGE TÊTE HAUTE

(43) Date of publication of application: 30.05.2018
(73) Proprietor: Volvo Car Corporation, 40 531 Göteborg (SE)
(72) Inventor: Palm, Mr. Niklas, 41467 Göteborg (SE); Hansson, Jonas, 41746 Göteborg (SE); Wilsgaard, Jonas, 43479 Vallda (SE)
(74) Representative: Valea AB

(56) References cited:
- EP-A1- 2 515 156
- WO-A1-2016/013283
- DE-A1-102011 075 205
- JP-A- H09 159 986
- JP-A- 2007 086 226
- US-A1- 2016 195 727

## Description

### Field of the Invention

The present invention relates to a vehicle comprising a head up display system.

### Background of the Invention

Head up displays are commonly arranged in vehicles to allow an user to read information from the display without having to look away from a previous viewpoint. In a typical implementation, the display commonly denoted "combiner" is part of a windshield of the vehicle. With this configuration, the head up display is configured to project an image onto the windshield whereby a driver of the vehicle may obtain information from the image at the same time as keeping close attention to the surrounding traffic.

A head up display system commonly includes reflecting surfaces such as mirrors for projecting the image to the windshield. Naturally, the mirrors may reflect light signals other than the desired image to be projected in the windshield. For example, sunlight entering the vehicle may be reflected by a mirror in the head up display and subsequently be reflected onto the windshield. Such reflections may cause disturbances for the driver of the vehicle and may result in reduced visibility for seeing the surrounding traffic and/or the displayed image, and may also cause discomfort for the driver.

US2011/0267702 discloses a head up display system which is configured to direct external light into the housing of the head up display. However, in order to direct the external light in the desired direction (into the housing) constraints on the positional relationship between the housing, the windshield and optical components of the system are needed. Similarly, US2016/195727 discloses to use mirrors to redirect external light away from an observer. JP2007/086226 discloses a head up display having adjustable mirrors for moving an image in the head up display. Further, in WO2016/013283, it is instead a dust cover for the head up display which is adapted to redirect incident light away from a driver of the vehicle. Another approach, also with positional constraints, is disclosed in DE 10 2011 075205 in which it is disclosed to form a small aperture in a housing for the head up display to only allow a narrow beam of light to exit the housing. EP2515156A1 discloses a head-up display device that can adjust a position of display information in a vertical direction.

Accordingly, there is room for improvements with regards to reducing reflections in head up display systems for vehicles.

### Summary

In view of above-mentioned prior art, it is an object of the present invention to provide an improved head up display system for a vehicle that alleviates at least some of the above mentioned drawbacks of the prior art.

According to a first aspect of the invention, there is provided a vehicle comprising a driver's seat, a windshield and a head up display system forming the kit of claim 1 and comprising: an electronic image emitting unit arranged to emit an optical image signal; a concave optically reflecting surface; wherein, when in use, concave optically reflecting surface is arranged to reflect the optical image signal emitted by the electronic image emitting unit towards a combiner element comprising at least part of the windshield such that an image representative of the optical image signal is visible from the driver's seat through the combiner element, wherein the vehicle further comprises: a reflection blocking member arranged between the concave optically reflecting surface and the driver's seat, the reflection blocking member is arranged such that it prevents at least part of external optical signals reflected in the head up display system to be reflected in the windshield.

The present invention is based on the realization that reflections in the windshield caused by external optical signals can be minimized or eliminated by arranging a reflection blocking member which blocks the external optical signals before they reach the windshield. The reflection blocking member is thus arranged to screen (or shade) parts of the possible reflection directions from the concave optically reflecting surface that may cause reflections in the windshield. At the same time, the reflection blocking member may not block the optical image signal emitted by the electronic image emitting unit and subsequently displayed in the combiner.

The optically reflecting surfaces are preferably optically specular, for example the optically reflecting surfaces may be mirror-like.

The concave optically reflecting surface may be part of an optically reflecting element. An optically reflecting element may be a mirror comprising the concave optically reflecting surface. The optically reflecting element may further comprise means for fastening the concave optically reflecting surface in the head up display system.

It should be noted that not necessarily the entire optical image signal is reflected by the concave optically reflecting surface, thus losses in the reflection or part diffusive optical reflection may be allowable.

The electronic image emitting unit is configured to emit an optical image signal with the image content which is to be displayed through the optical projection image. For example, the electronic image emitting unit is configured to "display" an image which may be reflected by the optically reflecting surface(s) and finally shown through the windshield. Furthermore, the electronic image emitting unit may comprise its own control unit or may be controlled by a host control unit for generating the images which are to be emitted as the optical image signal. For example, such images may comprise road data, speed, maps, directions, entertainment data (radio stations, play lists, etc).

According to one embodiment of the invention, the head up display system may comprise a housing for accommodating the concave optically reflecting surface and the electronic image emitting unit, wherein the reflection blocking member may be arranged outside the housing. In other words, the reflection blocking member may be arranged separated from the head up display housing, thereby allowing flexibility in the arrangement location of the reflection blocking member with respect to the head up display system. For example, the arrangement of the reflection blocking member may be adapted to the configuration of the head up display system, such as to the location of the concave optically reflecting surface. Alternatively, the reflection blocking member is part of a cover for the head up display system.

The reflection blocking member may be arranged to block an optical path between the concave optically reflecting surface and an upper portion of the windshield such that the reflection blocking member is arranged to prevent at least optical signals transmitted from the concave optically reflecting surface to be reflected in the upper portion of the windshield. Thereby, the reflection blocking member is arranged to screen (or shade) possible reflection directions from the concave optically reflecting surface that may cause reflections in at least the upper portion of the windshield. The upper portion may for example be the upper half portion of the windshield, or the upper portion above the combiner element portion in the windshield.

The reflection blocking member may advantageously be substantially horizontally arranged in the vehicle in a left-to-right direction of the vehicle seen from the driver's seat. In this way, the reflection blocking member may not block the view for the driver through the windshield. The reflection blocking member may be substantially horizontally arranged in the vehicle also in a front-to-rear direction of the vehicle.

The term "substantially horizontal" should be interpreted as that a small deviation from horizontal is allowable and within the scope of the claims. A deviation is allowable as long as the visibility for the driver through the windshield is such that the driving capabilities are not compromised. Horizontal should be interpreted with respect to the plane of the vehicle contact surface with the ground when standing on a planar surface.

According to one embodiment, said reflection blocking member may comprise an edge surface portion connecting an upper side of the reflection blocking member facing the windshield with an under side opposite the upper side, said edge surface portion facing in a downwards direction away from said upper side. The edge portion is configured to reflect light transmitted from the concave optically reflective surface, or from other parts of the head up display system, away from the windshield such that visible reflections may be avoided.

The edge surface portion may extend across the entire width of said reflection blocking member in a left-right direction as seen from the driver's seat.

According to one embodiment of the invention, the reflection blocking member may be fixated with respect to the concave optically reflecting surface.

According to one embodiment of the invention, a portion of the reflection blocking member projects away from a fixation surface onto which the reflection blocking member is fixated in the vehicle in a direction towards the windshield and towards an area above the concave optically reflecting surface. In this way, the reflections caused by external light are blocked by the portion of the reflection blocking member that projects towards the windshield. The projected portion forms an overhang from the fixation surface that projects towards the windshield. The reflection blocking member may be mechanically fixated to for example the dashboard or the head up display housing. In the present invention, however it is fixated to a cover for the head-up display system.

The reflection blocking member may have different geometries. For example, in one embodiment, the reflection blocking member may be adapted to extend across a distance substantially corresponding to the width of the concave optically reflecting surface in a horizontal direction along the dashboard of the vehicle.

The reflection blocking member may be substantially planar and may arranged at an angle with respect to the concave optically reflecting surface such that an underside of the reflection blocking member is visible from the concave optically reflecting surface. Thus, optical signals such as external reflections transmitted from the concave optically reflecting surface towards the reflection blocking member are blocked by the underside facing the concave optically reflecting surface.

Furthermore, the head up display system may comprises an image generation control unit, wherein the optical image signal emitted by the electronic image emitting unit is based on image data generated by the image generation control unit.

According to one embodiment, the head up display system may further comprises: a first optically reflective surface; wherein, when in use, the electronic image emitting unit is arranged to emit the optical image signal, towards the first optically reflective surface, the first optically reflecting surface is arranged such that the optical image signal is reflected by the first optically reflective surface towards the concave optically reflecting surface. The first optically reflective surface may be useful for obtaining a longer optical path for the image signal thereby providing a longer projection distance for the head up display system.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig 1 schematically illustrates a vehicle comprising a head up display system according to an example embodiment of the invention;
Fig. 2 is a schematic cross-section of a portion head up display system and reflection blocking member arranged in a vehicle according to an example embodiment of the invention; and
Fig. 3 conceptually illustrates an exemplary reflection blocking member arranged with a head up display system.

### Detailed Description of Example Embodiments

In the present detailed description, various embodiments of the system and method according to the present invention are mainly described with reference to integration in a vehicle in the form of a car. However, the present invention may equally be used for any other type of vehicle such as a truck, a train, an airplane, bus, boat, etc. Thus, this invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

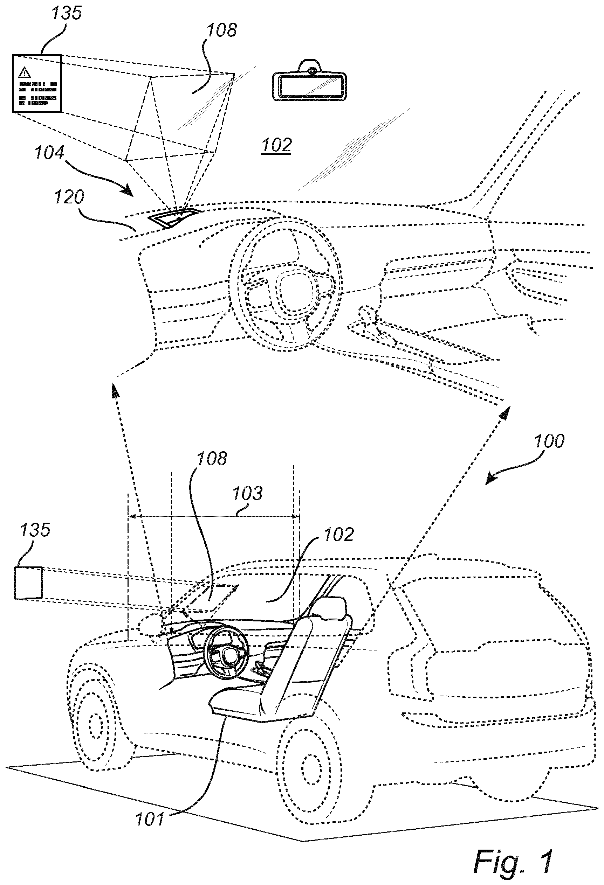

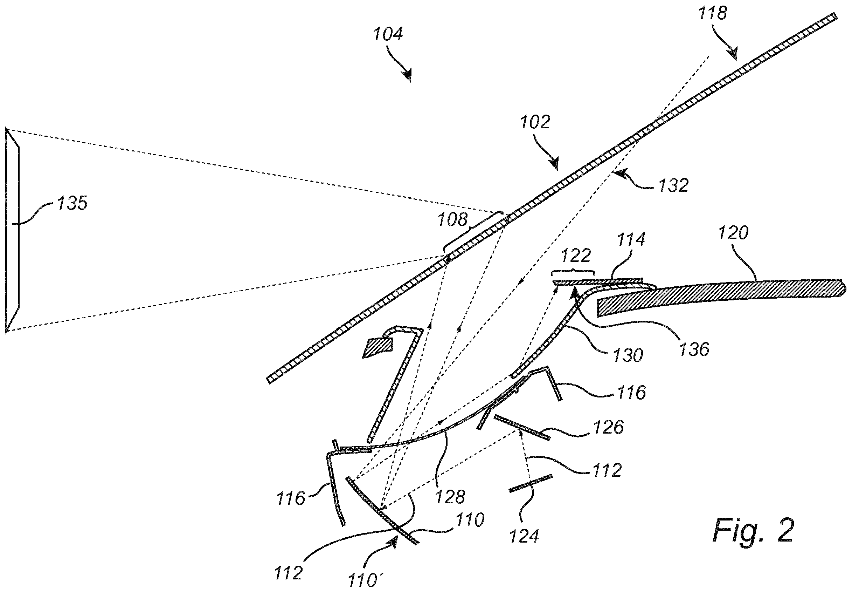

Fig. 1 shows a vehicle 100 in the form of a car 100 comprising a driver's seat 101, a windshield 102, and a head-up display system 104. Fig. 2 illustrates a partial cross-section of the embodiment shown in Fig. 1. With reference to Fig. 2, the head up display system 104 comprises an electronic image emitting unit 124 arranged to emit an optical image signal. The electronic image emitting unit 124 may for example be a liquid crystal display (LCD) unit for example of thin-film transistor (TFT) type with a suitable size. In addition, the electronic image emitting unit 124 may be connected to a control unit (not shown) or comprise its own control unit for generation of the images which are emitted as an optical image signal 112 by the electronic image emitting unit 124. The head up display system 104 further comprises a concave optically reflecting surface 110 which may be part of an optically reflecting element 110', e.g. a concave mirror. There is further a reflection blocking member 114 arranged between the concave optically reflecting surface 110 and the driver's seat (see fig. 1). The reflection blocking member 114 is arranged such that it prevents at least part of external optical signals 132 reflected in the head up display system to be reflected in the windshield 102. As illustrated in Fig. 2, an external optical signal 132 may enter through the windshield 102 and be reflected by the head up display system, for example by the concave optically reflecting surface 110. The external optical signal 132 may be redirected several times, for example in this case via the cover 130 in a direction towards the windshield such that reflections in the windshield may be seen by the driver. However, the reflection blocking member 114 prevents the redirected external optical signal 132 from reaching the windshield 102. The external optical signal may for example be sunlight or light from lamps or commercial signs, etc.

With further reference to Fig. 2, the head up display system may comprise a housing 116 (only partly shown) which accommodates the concave optically reflecting surface 110 and the electronic image emitting unit 124. The housing may further optionally accommodate a first optically reflective surface 126 which may be arranged to reflect the image signal emitted by the electronic image emitting unit 124 towards the concave optically reflecting surface 110. In case the electronic image emitting unit 124 is arranged to transmit the image signal directly towards the concave optically reflecting surface 110 the first optically reflective surface 126 may be omitted. The reflection blocking member 114 is arranged outside the housing 116. There is further shown a dust cover 128 arranged to prevent dust from entering the housing 116 and a head up display cover 130.

As shown in Fig. 2, the optical image signal 112 emitted by the electronic image emitting unit 124 is reflected by the concave optically reflecting surface 110 towards the windshield 102, wherein a portion of the windshield 108 acts as a combiner element such that, an image 135 representative of the optical image signal is visible from the driver's seat through the combiner element 108.

There are several possible arrangements for the reflection blocking member 114. For example, the reflection blocking member 114 may be arranged to block an optical path between the concave optically reflecting surface 110 and an upper portion 118 of the windshield. Thereby, the reflection blocking member 114 is arranged to prevent optical signals transmitted from the concave optically reflecting surface or other parts of the head up display system to be reflected in the upper portion of the windshield 102. The upper portion may be the portion in the windshield above the combiner element 108. It should be noted that the reflection blocking member does not block the optical image signal 112 from reaching the combiner element 108.

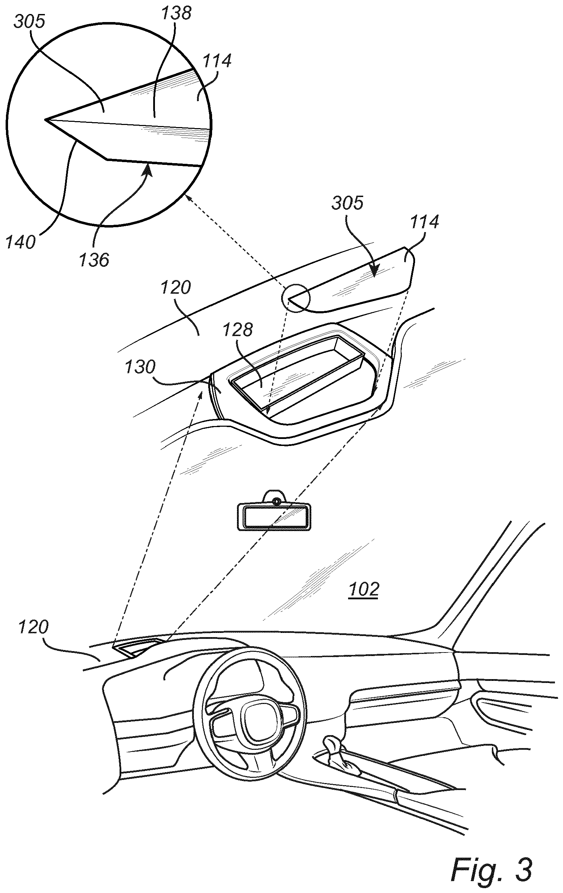

With further reference to Fig. 1 and now also to Fig. 3, according to the invention, the reflection blocking member is fixated to the head up display cover 130. In other examples, the reflection blocking member 114 may be fixated to the dashboard 120 of the vehicle 100. Alternatively, the reflection blocking member 114 may be fixated to housing 116. Furthermore, a portion 122 of the reflection blocking member projects towards the windshield 102 such that an overhang is formed, best seen in Fig. 2. The projected portion 122 is arranged projecting towards an area over the concave optically reflecting surface 110. The projected portion prevents external reflections from reaching the windshield 102. Further, the reflection blocking member 114 is arranged such that only the underside 136 of the reflection blocking member 114 is visible form the concave optically reflecting surface 110.

Now with reference to Fig. 3 which schematically illustrates a reflection blocking member 114 arranged as shown in Fig. 2. The reflection blocking member 114 has an edge face surface portion140 at the front portion 138. The edge surface portion 140 connects an upper side 305 of the reflection blocking member 114 facing the windshield 102 with an under side 136 opposite the upper side, said edge surface portion facing in a downwards direction away from said upper side. The edge face surface portion140 may be arranged facing the dust cover 128. The edge face portion140 at the front portion 138 is configured such that optical signals transmitted from the concave optically reflecting surface 110 and imparting on the edge surface portion 140 will be reflected by the edge surface portion 140 in a direction not intersecting with the windshield 102, or at least not intersecting the windshield such that the reflections are visible for the user. For example, reflections in the upper portion 108 of the windshield 102 are preferably avoided.

The reflection blocking member 114 may for example be made from a plastic material and may be manufactured using known molding processes.

The control unit may include a microprocessor, microcontroller, programmable digital signal processor or another programmable device. The control unit may be part of the electronic image emitting unit or may be a host control unit such as a control unit of the vehicle.

The person skilled in the art realizes that the present invention by no means is limited to the preferred embodiments described above. On the contrary, many modifications and variations are possible within the scope of the appended claims.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A kit for head up displaying in a vehicle (100), said kit comprising a head up display system (104) and a windshield (102) of said vehicle (100), said head up display system (104) comprising:
- an electronic image emitting unit (124) arranged to emit an optical image signal (112);
- a concave optically reflecting surface (110);
- a housing (116) for accommodating said concave optically reflecting surface (110) and said electronic image emitting unit (124);
said kit further comprising
- a combiner element (108) comprising at least part of said windshield (102) of said vehicle (100),
said concave optically reflecting surface (110) is arranged to reflect the optical image signal emitted by said electronic image emitting unit (104) towards said combiner element (108), such that an image (135) representative of said optical image signal is visible through said combiner element (108),
wherein said kit further comprises
- a reflection blocking member (114) arranged to block an optical path between said concave optically reflecting surface (110) and an upper portion (118) of said windshield (102) above said combiner element (108), such that said reflection blocking member (114) is arranged to prevent at least optical signals transmitted from said concave optically reflecting surface (110) to be reflected in said upper portion (118) of said windshield (102), said reflection blocking member (114) being arranged outside said housing (116) separated from said housing (116),
- a dust cover (128) arranged to prevent dust from entering the housing (116), and
- a cover (130) for the head up display system (104), wherein said reflection blocking member (114) is fixated to said cover (130), said cover (130) not being a dashboard (120).

2. The kit according to claim 1, wherein said reflection blocking member (114) is arranged to prevent an external optical signal (132), e.g. sunlight or light from lamps or commercial signs, entering through said windshield (102) and being reflected by said head up display system (104), from reaching said windshield (102).

3. The kit according to claim 2, wherein said reflection blocking member (114) is arranged to prevent an external optical signal (132), entering through said windshield (102) being reflected by said head up display system (104) and being redirected via said cover (130) from reaching said windshield (102).

4. The kit according to any one of the preceding claims, wherein said reflection blocking member (114) comprises an edge surface portion (140) connecting an upper side (305) of the reflection blocking member (114) adapted to face said windshield with an under side (136) opposite the upper side, said edge surface portion (140) facing in a downwards direction away from said upper side.

5. The kit according to claim 4, wherein said edge surface portion (140) extends across the entire width of said reflection blocking member (114) in a left-right direction as seen from a driver's seat of said vehicle (100).

6. The kit according to any one of the preceding claims, wherein said reflection blocking member (114) is fixated with respect to said concave optically reflecting surface (110).

7. The kit according to any one of the preceding claims, wherein a portion (122) of said reflection blocking member (114) is adapted to project away from a fixation surface (130, 120) onto which said reflection blocking member (114) is fixated in a direction towards said windshield (102) and towards an area above said concave optically reflecting surface (110).

8. The kit according to any one of the preceding claims, wherein said reflection blocking member (114) is adapted to extend across a distance substantially corresponding to the width of said concave optically reflecting surface (110) in a horizontal direction along said dashboard (120) of said vehicle.

9. The kit according to any one of the preceding claims, wherein said reflection blocking member (114) is substantially planar and is arranged at an angle with respect to said concave optically reflecting surface (100) such that an underside (136) of said reflection blocking member (114) is visible from said concave optically reflecting surface (110).

10. The kit according to any one of the preceding claims, wherein the head up display system (104) further comprises an image generation control unit, wherein the optical image signal emitted by the electronic image emitting unit is based on image data generated by the image generation control unit.

11. The kit according to any one of the preceding claims, wherein the head up display system (104) further comprises:
- a first optically reflective surface (126) accommodated in said housing (116); wherein, when in use,
said electronic image emitting unit (124) is arranged to emit said optical image signal, towards said first optically reflective surface (126), said first optically reflecting surface (126) is arranged such that the optical image signal is reflected by the first optically reflective surface (126) towards said concave optically reflecting surface (110).

12. A vehicle (100) comprising a kit according to any one of the preceding claims.

## Patentansprüche

1. Bausatz für eine Frontscheibenanzeige in einem Fahrzeug (100), wobei der Bausatz ein Frontscheibenanzeigesystem (104) und eine Windschutzscheibe (102) des Fahrzeugs (100) umfasst, wobei das Frontscheibenanzeigesystem (104) umfasst:
- eine elektronische Bildabgabeeinheit (124), die ausgelegt ist, um ein optisches Bildsignal (112) abzugeben;
- eine konkave optisch reflektierende Oberfläche (110);
- ein Gehäuse (116) zum Unterbringen der konkaven optisch reflektierenden Oberfläche (110) und der elektronischen Bildabgabeeinheit (124);
wobei der Bausatz außerdem umfasst:
- ein Kombinierelement (108), das mindestens einen Teil der Windschutzscheibe (102) des Fahrzeugs (100) umfasst,
wobei die konkave optisch reflektierende Oberfläche (110) ausgelegt ist zum Reflektieren des optischen Bildsignals, das von der elektronischen Bildabgabeeinheit (104) abgegeben wird, in Richtung auf das Kombinierelement (108), sodass ein Bild (135), welches das optische Bildsignal darstellt, durch das Kombinierelement (108) sichtbar ist,
wobei der Bausatz außerdem umfasst:
- ein Reflexionsblockierelement (114), das ausgelegt ist zum Blockieren eines optischen Pfads zwischen der konkaven optisch reflektierenden Oberfläche (110) und einem oberen Abschnitt (118) der Windschutzscheibe (102) über dem Kombinierelement (108), sodass das Reflexionsblockierelement (114) ausgelegt ist, um zu verhindern, dass mindestens optische Signale, die von der konkaven optisch reflektierenden Oberfläche (110) übertragen werden, in den oberen Abschnitt (118) der Windschutzscheibe (102) reflektiert werden, wobei das Reflexionsblockierelement (114) außerhalb des Gehäuses (116) und getrennt von dem Gehäuse (116) angeordnet ist,
- eine Staubabdeckung (128) die ausgelegt ist, um zu verhindern, dass Staub in das Gehäuse (116) eindringt, und
- eine Abdeckung (130) für das Frontscheibenanzeigesystem (104), wobei das Reflexionsblockierelement (114) an der Abdeckung (130) befestigt ist, wobei die Abdeckung (130) kein Armaturenbrett (120) ist.

2. Bausatz nach Anspruch 1, wobei das Reflexionsblockierelement (114) ausgelegt ist, um zu verhindern, dass ein externes optisches Signal (132), z.B. Sonnenlicht oder Licht von Lampen oder Werbetafeln, das durch die Windschutzscheibe (102) eintritt und von dem Frontscheibenanzeigesystem (104) reflektiert wird, die Windschutzscheibe (102) erreicht.

3. Bausatz nach Anspruch 2, wobei das Reflexionsblockierelement (114) ausgelegt ist, um zu verhindern, dass ein externes optisches Signal (132), das durch die Windschutzscheibe (102) eintritt und von dem Frontscheibenanzeigesystem (104) reflektiert und über die Abdeckung (130) umgeleitet wird, die Windschutzscheibe (102) erreicht.

4. Bausatz nach einem der vorhergehenden Ansprüche, wobei das Reflexionsblockierelement (114) einen Randoberflächenabschnitt (140) umfasst, der eine Oberseite (305) des Reflexionsblockierelements (114), die geeignet ist, um der Windschutzscheibe gegenüberzuliegen, mit einer entgegengesetzt zur Oberseite liegenden Unterseite (136) verbindet, wobei der Randoberflächenabschnitt (140) in einer Abwärtsrichtung weg von der Oberseite gerichtet ist.

5. Bausatz nach Anspruch 4, wobei sich der Randoberflächenabschnitt (140) in einer Links-Rechts-Richtung vom Fahrersitz des Fahrzeugs (100) aus gesehen über die ganze Breite des Reflexionsblockierelements (114) erstreckt.

6. Bausatz nach einem der vorhergehenden Ansprüche, wobei das Reflexionsblockierelement (114) in Bezug auf die konkave optisch reflektierende Oberfläche (110) befestigt ist.

7. Bausatz nach einem der vorhergehenden Ansprüche, wobei ein Abschnitt (122) des Reflexionsblockierelements (114) geeignet ist, um weg von einer Befestigungsoberfläche (130, 120), auf der das Reflexionsblockierelement (114) befestigt ist, in einer Richtung auf die Windschutzscheibe (102) und in Richtung auf einen Bereich über der konkaven optisch reflektierenden Oberfläche (110) zu projizieren.

8. Bausatz nach einem der vorhergehenden Ansprüche, wobei das Reflexionsblockierelement (114) geeignet ist, um sich über eine Distanz, die im Wesentlichen der Breite der konkaven optisch reflektierenden Oberfläche (110) entspricht, in einer horizontalen Richtung entlang des Armaturenbretts (120) des Fahrzeugs zu erstrecken.

9. Bausatz nach einem der vorhergehenden Ansprüche, wobei das Reflexionsblockierelement (114) im Wesentlichen eben ist und in einem Winkel in Bezug auf die konkave optisch reflektierende Oberfläche (100) so angeordnet ist, dass eine Unterseite (136) des Reflexionsblockierelements (114) von der konkaven optisch reflektierenden Oberfläche (110) aus sichtbar ist.

10. Bausatz nach einem der vorhergehenden Ansprüche, wobei das Frontscheibenanzeigesystem (104) außerdem eine Bilderzeugungssteuereinheit umfasst, wobei das optische Signal, das von der elektronischen Bildabgabeeinheit abgegeben wird, auf Bilddaten beruht, die von der Bilderzeugungssteuereinheit erzeugt werden.

11. Bausatz nach einem der vorhergehenden Ansprüche, wobei das Frontscheibenanzeigesystem (104) außerdem umfasst:
- eine erste optisch reflektierende Oberfläche (126), die in dem Gehäuse (116) untergebracht ist; wobei
die elektronische Bildabgabeeinheit (124)im Betrieb ausgelegt ist, um das optische Bildsignal in Richtung auf die erste optisch reflektierende Oberfläche (126) abzugeben, wobei die erste optisch reflektierende Oberfläche (126) so ausgelegt ist, dass das optische Bildsignal von der ersten optisch reflektierenden Oberfläche (126) in Richtung auf die konkave optisch reflektierende Oberfläche (110) reflektiert wird.

12. Fahrzeug (100), das einen Bausatz nach einem der vorhergehenden Ansprüche umfasst.

## Revendications

1. Kit pour affichage tête haute dans un véhicule (100), ledit kit comprenant un système d'affichage tête haute (104) et un pare-brise (102) dudit véhicule (100), ledit système d'affichage tête haute (104) comprenant :
- une unité électronique d'émission d'images (124) agencée pour émettre un signal d'image optique (112) ;
- une surface optiquement réfléchissante concave (110) ;
- un boîtier (116) pour accueillir ladite surface optiquement réfléchissante concave (110) et ladite unité électronique d'émission d'images (124) ;
ledit kit comprenant en outre
- un élément de combinaison (108) comprenant au moins une partie dudit pare-brise (102) dudit véhicule (100),
ladite surface optiquement réfléchissante concave (110) étant agencée pour réfléchir le signal d'image optique émis par ladite unité électronique d'émission d'images (104) vers ledit élément de combinaison (108), de telle sorte qu'une image (135) représentative dudit signal d'image optique est visible à travers l'élément de combinaison (108),
ledit kit comprenant en outre
- un élément de blocage de la réflexion (114) agencé pour bloquer un chemin optique entre ladite surface optiquement réfléchissante concave (110) et une partie supérieure (118) dudit pare-brise (102) au-dessus dudit élément de combinaison (108), de telle sorte que ledit élément de blocage de la réflexion (114) est agencé pour empêcher au moins des signaux optiques transmis depuis ladite surface optiquement réfléchissante concave (110) d'être réfléchis dans ladite partie supérieure (118) dudit pare-brise (102), ledit élément de blocage de la réflexion (114) étant agencé à l'extérieur dudit boîtier (116) à l'écart dudit boîtier (116),
- un couvercle antipoussière (128) agencé pour empêcher la poussière d'entrer dans le boîtier (116), et
- un capot (130) pour le système d'affichage tête haute (104), ledit élément de blocage de la réflexion (114) étant fixé audit capot (130), ledit capot (130) n'étant pas un tableau de bord (120).

2. Kit selon la revendication 1, dans lequel ledit élément de blocage de la réflexion (114) est agencé pour empêcher un signal optique externe (132), par ex. la lumière du soleil ou la lumière provenant de lampes ou d'enseignes commerciales, entrant par ledit pare-brise (102) et réfléchi par ledit système d'affichage tête haute (104), d'atteindre ledit pare-brise (102).

3. Kit selon la revendication 2, dans lequel ledit élément de blocage de la réflexion (114) est agencé pour empêcher un signal optique externe (132) entrant par ledit pare-brise (102), réfléchi par ledit système d'affichage tête haute (104) et redirigé par le biais dudit capot (130), d'atteindre ledit pare-brise (102).

4. Kit selon l'une quelconque des revendications précédentes, dans lequel ledit élément de blocage de la réflexion (114) comprend une partie de surface de bord (140) reliant un dessus (305) de l'élément de blocage de la réflexion (114) adapté pour faire face audit pare-brise à un dessous (136) à l'opposé du dessus, ladite partie de surface de bord (140) étant tournée dans une direction allant vers le bas en s'éloignant dudit dessus.

5. Kit selon la revendication 4, dans lequel ladite partie de surface de bord (140) s'étend à travers la largeur entière dudit élément de blocage de la réflexion (114) dans une direction gauche-droite quand on regarde depuis un siège de conducteur dudit véhicule (100).

6. Kit selon l'une quelconque des revendications précédentes, dans lequel ledit élément de blocage de la réflexion (114) est fixe par rapport à ladite surface optiquement réfléchissante concave (110).

7. Kit selon l'une quelconque des revendications précédentes, dans lequel une partie (122) dudit élément de blocage de la réflexion (114) est adaptée pour faire saillie depuis une surface de fixation (130, 120) sur laquelle ledit élément de blocage de la réflexion (114) est fixé dans une direction vers ledit pare-brise (102) et vers une zone au-dessus de ladite surface optiquement réfléchissante concave (110).

8. Kit selon l'une quelconque des revendications précédentes, dans lequel ledit élément de blocage de la réflexion (114) est adapté pour s'étendre sur une distance correspondant sensiblement à la largeur de ladite surface optiquement réfléchissante concave (110) dans une direction horizontale le long dudit tableau de bord (120) dudit véhicule.

9. Kit selon l'une quelconque des revendications précédentes, dans lequel ledit élément de blocage de la réflexion (114) est sensiblement plan et est agencé à un angle par rapport à ladite surface optiquement réfléchissante concave (110) de telle sorte qu'un dessous (136) dudit élément de blocage de la réflexion (114) est visible depuis ladite surface optiquement réfléchissante concave (110).

10. Kit selon l'une quelconque des revendications précédentes, dans lequel le système d'affichage tête haute (104) comprend en outre une unité de commande de génération d'images, le signal d'image optique émis par l'unité électronique d'émission d'images étant basé sur des données d'image générées par l'unité de commande de génération d'images.

11. Kit selon l'une quelconque des revendications précédentes, dans lequel le système d'affichage tête haute (104) comprend en outre :
- une première surface optiquement réfléchissante (126) accueillie dans ledit boîtier (116) ; dans lequel, à l'usage,
ladite unité électronique d'émission d'images (124) est agencée pour émettre ledit signal d'image optique vers ladite première surface optiquement réfléchissante (126), ladite première surface optiquement réfléchissante (126) est agencée de telle sorte que le signal d'image optique est réfléchi par la première surface optiquement réfléchissante (126) vers ladite surface optiquement réfléchissante concave (110).

12. Véhicule (100) comprenant un kit selon l'une quelconque des revendications précédentes.
